# EUROPEAN PATENT SPECIFICATION

(11) **EP 1 295 784 B1**
(45) Date of publication and mention of the grant of the patent: **11.05.2011**
(21) Application number: 02019916.2
(22) Date of filing: 04.09.2002
(51) Int. Cl.: B62J 9/00, B62M 23/02, B62K 19/46, B60L 8/00

(54) **Vehicle with solar cell**
Fahrzeug mit Solarzellen
Véhicule avec panneau de cellules solaires

(30) Priority: 25.09.2001 JP 2001291299
(43) Date of publication of application: 26.03.2003
(73) Proprietor: HONDA GIKEN KOGYO KABUSHIKI KAISHA, Tokyo (JP)
(72) Inventor: Cho, Toshiyuki, Wako-shi, Saitama (JP); Nakagomi, Yoshio, Wako-shi, Saitama (JP)
(74) Representative: Liska, Horst

(56) References cited:
- PATENT ABSTRACTS OF JAPAN vol. 016, no. 141 (M-1232), 9 April 1992 (1992-04-09) -& JP 04 000201 A (TOKYO R & D:KK), 6 January 1992 (1992-01-06)
- PATENT ABSTRACTS OF JAPAN vol. 1996, no. 08, 30 August 1996 (1996-08-30) -& JP 08 111905 A (SANYO ELECTRIC CO LTD), 30 April 1996 (1996-04-30)
- PATENT ABSTRACTS OF JAPAN vol. 2000, no. 12, 3 January 2001 (2001-01-03) -& JP 2000 247287 A (HASHIMOTO YOSHITAKA), 12 September 2000 (2000-09-12)

## Description

The present invention relates to a vehicle with solar cell, particularly to a vehicle provided with solar cells disposed on a luggage carrier or the like and capable of efficiently receiving sunlight.

Of motor-assisted bicycles in which electrically generated power can be auxiliarily added to power generated by human force, one that obtains electric power from solar cells is known. JP-A-2000-247287 discloses a motor-assisted bicycle which comprises a solar cell panel on a luggage basket provided on the upper side of the front wheel of the bicycle. The solar cell panel is fixed by a hinge to a control box fixed on the front side of the basket, and is so set as to cover the basket in the manner of a lid.

The arrangement of the solar cell panel mentioned above is suitable for receiving sunlight by directing a light-receiving portion to the upper side. However, since the solar cell panel is so provided as to cover the basket, the solar cell panel must be retracted by rotating it to the front side of the basket through utilizing the hinge at the time of putting luggage into the basket or taking luggage out of the basket. On such an occasion, the solar cell panel may be damaged or stained by contact with adjacent members. Conventionally, sufficient consideration has not been given to the dealing with the solar cell panel in such situations.

JP-A-04000209 shows a vehicle with a solar cell in accordance with the preamble of claims 1 and 2. There, front solar panels are connected to each other in a U-shaped configuration and are commonly pivoted on a horizontal pivot shaft to the vehicle body. The connection between the three panels is formed by respective hinges, so that the U-shaped configuration can be turned into a flat planar configuration. The vehicle shown in this document has no front storage box on which the front panels are mounted or to be stored. Instead the front panels are directly mounted on a stay extending from the vehicle head pipe via the pivot shaft. But this vehicle has a rear storage box for accommodating for example a helmet. The top of this box is open and can be closed by lids which are formed as solar panels. The position of these rear solar panels can be adjusted for sun exposure in different positions, or they can be folded down along the lateral outer side of the storage box in the non-use position of the panel while the vehicle is travelling. Therefore, the rear panels are completely unprotected and exposed to dirt and can be scratched.

It is an object of the present invention to solve the above-mentioned problems of the prior art and to provide a vehicle with solar cells so considered as to be capable of efficiently receiving sunlight and be scratched or stained with difficulty.

In order to attain the above object, the present invention provides a vehicle with solar cell, comprising a storage box opened on the upper side thereof provided at a vehicle body, and a solar cell panel held on said storage box, characterized in that said storage box is provided at a front portion of the vehicle body and adapted to store said solar cell panel along a rear wall of said storage box in a non-use position of the solar cell panel.

The present invention also provides a vehicle with solar cell, comprising a storage box opened on the upper side thereof provided at a rear portion of a vehicle body, and a solar cell panel held on said storage box, characterized in that said storage box is adapted to store said solar cell panel along a front wall of said storage box in a non-use position of the solar cell panel.

Therefore, the solar cell panel is stored on the side of the center of the vehicle body, so that the solar cell panel would not easily collide against or make contact with external things, and would not easily be stained or scratched.

Preferably, there are provided a pivot shaft provided at one end of the solar cell panel so as to pivotally support the solar cell panel swivelably relative to the storage box at a position near a wall on the side where the solar cell panel is stored, and a giude means provided in the storage box in order to guide the pivot shaft along the wall on the side where the solar cell panel is stored.

Therefore, the solar cell panel is swiveled around the pivot shaft, and then the pivot shaft is moved downwards along the above-mentioned wall by guide means, whereby the solar cell panel is stored in the storage box with the pivot shaft on the lower side.

Preferably, there are provided a lock device fitted to the solar cell panel, and an engaging member provided at an upper portion of the storage box and engaged with the lock device. Therefore, in the condition where the solar cell panel is set on the storage box so as to cover the storage box, the lock device is engaged with the engaging member, whereby the solar cell panel is connected with the storage box and is locked.

Preferably, the solar cell panel is stored along an inside wall surface of the storage box. Therefore, the solar cell panel is protected by the wall surface of the storage box, so that this arrangement is more effective for coping with scratches and stains.

Preferably, there is provided a connecting portion by which a cable for taking out electric power generated by the solar cell panel is connected to the solar cell panel in the vicinity of the pivot shaft. Therefore, the displacement of the cable at the time of swiveling the solar cell panel around the pivot shaft can be reduced, so that the wiring length of the cable can be reduced.

Preferably, there is provided a holding member for accommodating the solar cell panel so that the solar cell panel is stored along the outside wall surface of the storage box. Preferably, the solar cell panel can be protected from external things by the wall of the storage box, and the original purpose of the storage box to store things other than the solar cell panel can be easily achieved.

According to the invention as set forth in the claims 1 to 7, the solar cell panel is stored at a position on the side of a central portion of the vehicle body, so that the solar cell panel would not collide with or make conact with external things, and can be made to be stained or scratched with difficulty. Particularly, since the solar cell panel is protected by a wall surface of the storage box, the arrangement is more effective against scratches and stains.

According to the invention as set forth in claim 3, the solar cell panel is not separated from the storage box, so that it can be stored in the storage box in the state of being connected. Besides, according to the invention as set forth in claim 4, the solar cell panel can be locked in the sate of being mounted on the storage box so as to cover the storage box, so that the solar cell panel can have the function as a lid for the storage box, and can have an antitheft function for the panel itself.

In addition, according to the invention as set forth in claim 6, the displacement of the cable at the time of swiveling the solar cell panel around the pivot shaft can be reduced, so that the wiring length of the cable can be reduced. Furthermore, according to the invention as set forth in claim 7, the solar cell panel can be protected from external things by the wall of the storage box, and, at the same time, the original purpose of the storage box to store other things than the solar cell panel can be sufficiently attained.
Fig. 1 is a side view of a major part of a motor-assisted bicycle with solar cell according to one embodiment of the present invention.
Fig. 2 is a side view of the motor-assisted bicycle with solar cell according to the embodiment of the present invention.
Fig. 3 is a plan view showing a roughly right half of a solar cell panel and a basket.
Fig. 4 is a perspective view of a major part showing an engaging portion between the solar cell panel and the basket.
Fig. 5 is a perspective view of a major part of the basket in the condition where the solar cell panel is stored therein.
Fig. 6 is a view from above of the basket in the condition where the solar cell panel is stored therein.
Fig. 7 is a perspective view of a major part of the vicinity of the brim of the basket.
Fig. 8 is a perspective sectional view showing the left half of a front portion of a bicycle according to a modified example.
Fig. 9 is a side sectional view showing the left half of the front portion of the bicycle according to a modified example.
Fig. 10 is a view from the lower side of a rear portion of the basket.
Fig. 11 is a plan view of a front portion of the solar cell panel.
Fig. 12 is a sectional view taken along B-B of Fig. 11.
Fig. 13 is a perspective view of the basket.
Fig. 14 is a side sectional view of the basket.
Fig. 15 is an enlarged sectional view of the basket.
Fig. 16 is a perspective view of a basket 7 according to a third modified example.
Fig. 17 is a perspective view of a rear portion of a basket 7 according to a fourth modified example.
Fig. 18 is a perspective view of a cable connecting portion of the solar cell panel.
Fig. 19 is a side view of a bicycle comprising a rear basket mounted on a luggage carrier at a rear portion thereof.

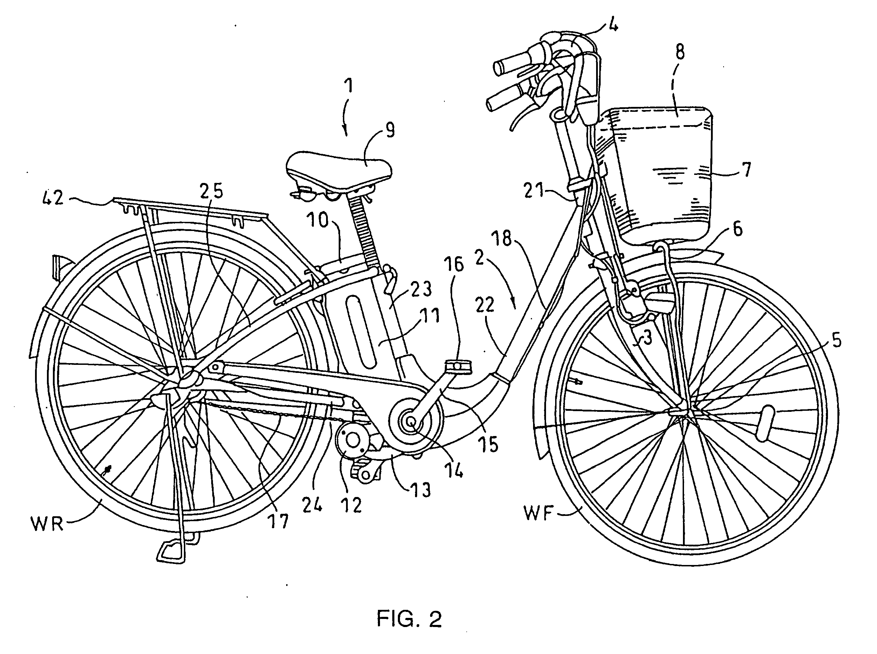

The present invention will be described below referring to the drawings. Fig. 2 is a side view of a motor-assisted bicycle with solar cell according to one embodiment of the present invention. In Fig. 2, a vehicle body frame 2 of the motor-assisted bicycle 1 comprises a head pipe 21 at the front end thereof, a down pipe 22 extending rearwardly downwards from the head pipe 21, and a seat post 23 erected upwards from a support pipe (not shown) which is attached to the rear end of the down pipe 22 and extends in the left-right direction of the vehicle body.

A front fork 3 is turnably supported on the head pipe 21. A front wheel WF is shaft-supported at the lower end of the front fork 3, and the front wheel WF can be steered by a handle 4 provided at the upper end of the front fork 3. A basket (front basket) 7 for storing luggage is mounted on an upper portion of an auxiliary frame 6 having its lower end connected to an axle 5 of the front wheel and extending upwards. While a box body (storage box) for storing luggage mounted on the vehicle body is described as a basket herein, the box body may be any of various box bodies known as luggage storage containers such as, for example, a basket knitted in mesh from a line material, a basket formed of metal net, and a box molded from resin or metal.

A solar cell panel (hereinafter referred to as "panel") 8 having a structure described later is fitted to the basket 7. The panel 8 is not limited to a non-flexible plate form member, but may be one having flexibility to such an extent as to maintain its original shape in the condition of being mounted on the basket 7, such as an amorphous film.

At the rear ends of a left-right pair of rear forks 24 extended to the rear side from the seat post 23, a rear wheel WR as a driving wheel disposed between the pair of rear forks 24 is shaft-supported. A left-right pair of stays 25 is provided between an upper portion of the seat post 23 and both the rear forks 24.

A seat 9 is fitted to an upper portion of the seat post 23 so that its height can be adjusted. A battery storage box 11 for detachably storing a battery 10 is provided on the lower side of the seat 9 between the seat post 23 and the rear wheel WR.

A power unit 13 comprising an electric motor 12 supplied with electric power from the battery 10 stored in the battery storage box 11 is provided on the rear side of the vehicle body with respect to the support pipe which is not shown. An input shaft of the power unit 13, namely, a crankshaft 14 is supported by the support pipe not shown. Pedals 16 are fitted to the crankshaft 14 through cranks 15.

Power from the motor 12 is added to the power (tread force) inputted from the crankshaft 14, and a driving force as a composite force is taken out through an output shaft which is not shown. The driving force is transmitted to the rear wheel WR through a chain 17. The output of the power from the electric motor 12 is controlled by a controller, not shown, according to the magnitude of the tread force. A tread force detector (not shown) is provided for controlling the electric motor 12 according to the tread force.

A harness 18 is provided along the down pipe 22, and electric power generated by the panel 8 is inputted to the battery 10 through a controller in the power unit 13, by way of a cable fitted to the harness 18.

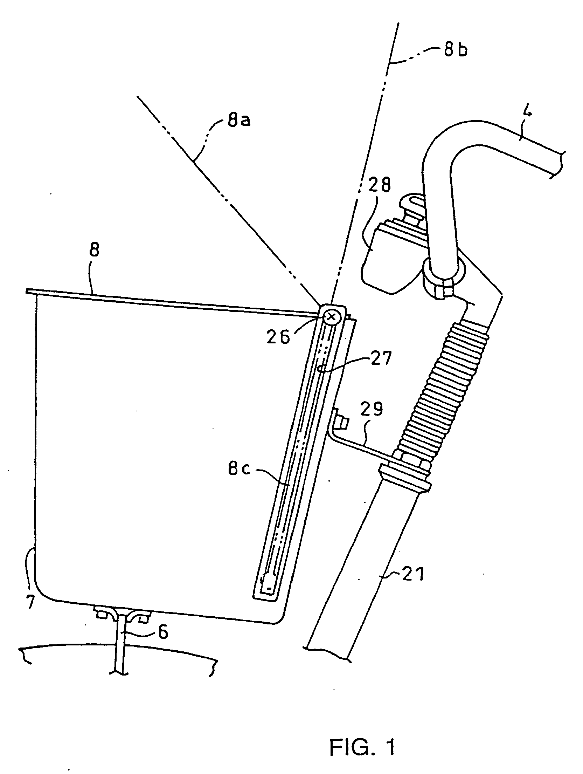

Fig. 1 is a side view of a major part of the bicycle. In the figure, a rear portion of the basket 7 is engaged with the head pipe 21 by a latch 29. The latch 29 has it one end connected to an upper portion of the head pipe 21, and its other end connected to a rear wall of the basket 7 by, for example, a bolt-nut combination.

The panel 8 is supported by a pivot shaft 26 extending in the left-right direction on the rear side of the vehicle body with respect to the basket 7, and is provided turnably with the pivot shaft 26 as a center. The upper side of the basket 7 is opened by turning the panel 8 clockwise in the figure as indicated by 8a-8b from the condition of making contact with the brim of the basket 7. Further, the panel 8 is moved downwards, directly in the erected posture indicated by symbol 8b. By this, the pivot shaft 26 of the panel 8 is guided by vertical guide holes 27 provided at left and right positions near the rear portion of the basket 7, and the panel 8 is stored in the basket 7 as indicated by symbol 8c.

In order to return the panel 8 into a roughly horizontal posture along the brim of the basket 7, it suffices to pull up the panel 8 from the inside of the basket 7, to move the panel 8 so that the pivot shaft 26 is located at the upper ends of the guide holes 27, and then to turn the panel 8 counterclockwise in the figure as indicated by 8b-8a. A main switch 28 of the motor-assisted bicycle 1 is provided in the vicinity of a central portion of the handle 4.

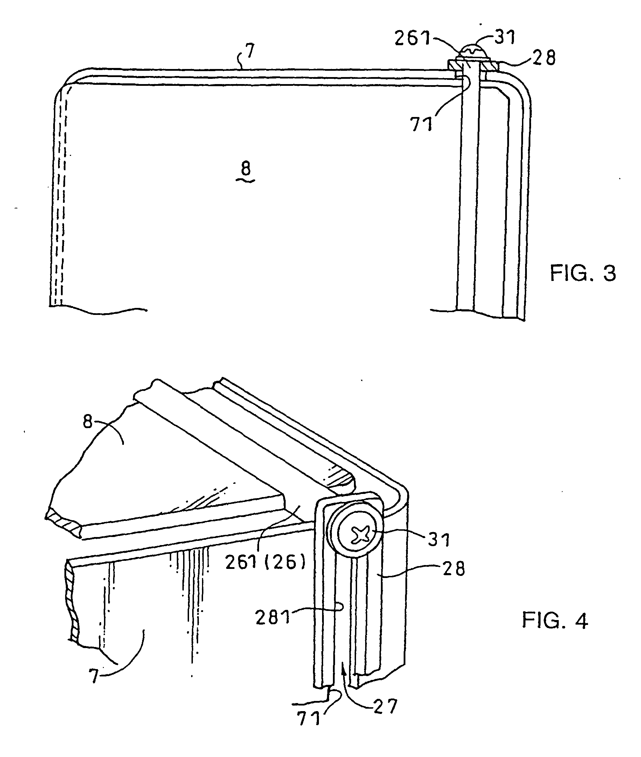

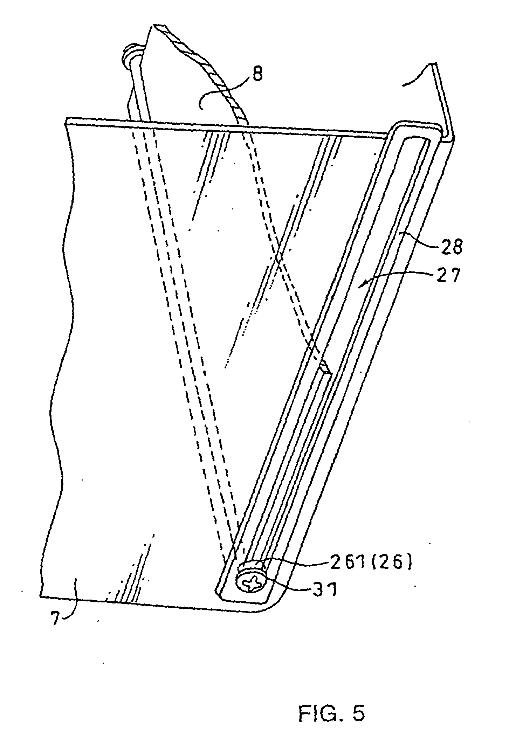

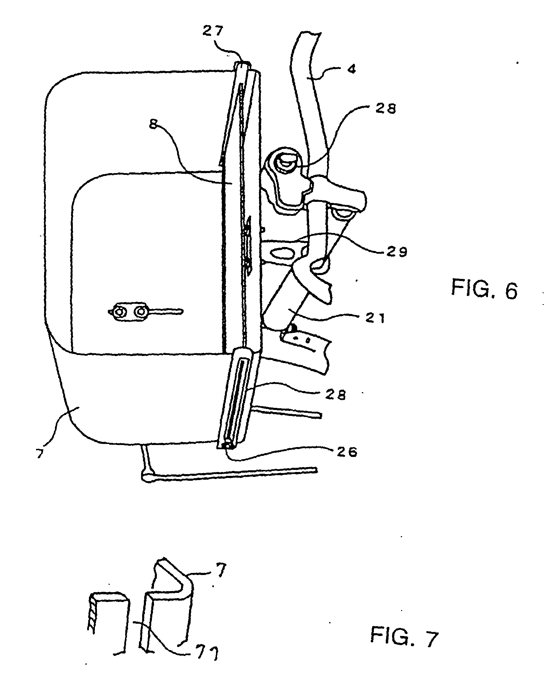

Fig. 3 is a plan view showing a roughly right half of the panel and the basket, Fig. 4 is a perspective view of a major part showing an engaging portion between the basket and the panel, Fig. 5 is a perspective view of a major part of the basket showing the condition where the panel is stored, Fig. 6 is a view from the upper side of the basket showing the condition where the panel is stored, and Fig. 7 is a perspective view of a major part in the vicinity of the brim of the basket.

In these figures, vertically elongate frame bodies 28 are attached to left and right side surfaces of the basket 7. The frame body 28 is assembled with a window 281 in the manner of overlapping with a slit 71 formed in each side portion of the basket 7, and the window 281 and the slit 71 constitute the guide hole 27. The slit 71 is opened at the brim of the basket 7 (See Fig. 7). The position of the frame body 28 is so set that the upper end of the window 281 is located to be extended to the upper side of the opened portion.

More concretely, the pivot shaft 26 is bosses 61 extended to the left and right outsides from the panel 8, and the bosses are projected to the outside through the guide holes 27, namely, the slits 71 and the windows 281. An end portion of the boss 261 is provided with a threaded hole, and a set screw 31 is screwed into the threaded hole. The condition where the panel 8 is erected from the position shown in Figs. 3 and 4 and the bosses 261 are moved along the guide holes 27 to the lowermost portions is shown in Figs. 5 and 6. As seen from these figures, the panel 8 is stored along the rear inside wall of the basket 7, so that the appearance is simple, and the vertical movements of the panel 8 in the basket 7 are smoothly performed along the guide holes 27.

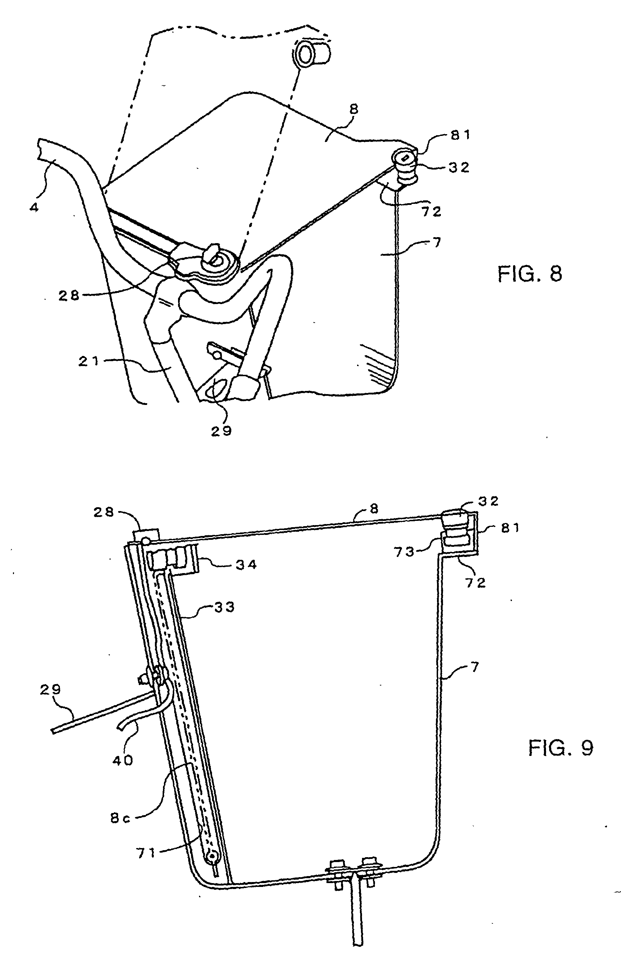

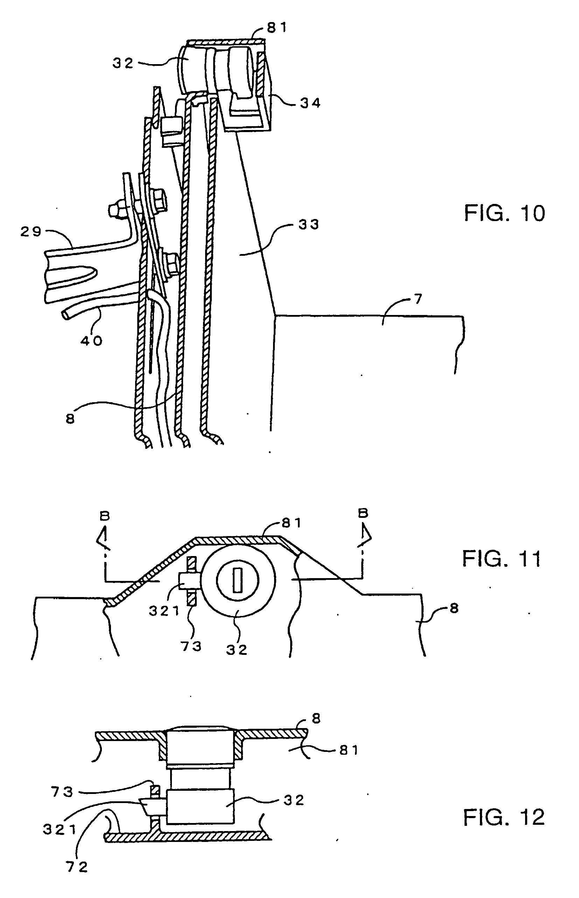

Next, a modified example of the structure for storing the panel 8 will be described. Fig. 8 is a perspective sectional view showing a left half of a front portion of the bicycle according to the modified example, Fig. 9 is a side sectional view of the same, and Fig. 10 is a view from the lower side of a rear portion of the basket. Further, Fig. 11 is a plan view of a front portion of the panel, and Fig. 12 is a sectional view taken along B-B of Fig. 11.

In this modified example, the panel 8 is provided with a lock. While the panel 8 is used for charging the battery 10, it is so disposed as to cover an upper portion of the basket 7 and, therefore, functions as a lid for the basket 7. In this modified example, the panel 8 is integrally provided with the lock, whereby the function as the lid is more enriched, and antitheft function for the panel 8 itself is attained.

In these figures, a tubular lock device 32 projecting to the lower side of the panel 8 (in the roughly horizontal posture along the brim of the basket) is provided at a central portion of the front end of the panel 8. The panel 8 has a front wall 81 in the manner of covering the lock device 32. On the other hand, the basket 7 has a horizontal portion 72 opposed to the lower side of the lock device 32 when the panel is set in the roughly horizontal posture so as to cover the upper portion of the basket 7, and a vertical member 73 provided with a hole for engagement with a plunger 321 of the lock device 32 is erected on the horizontal member 72. A cable 40 for transmitting electric power generated which extends to the battery 10 is connected to the vicinity of the pivot shaft of the panel 8. As seen from Figs. 11 and 12, when the panel 8 is set in a horizontal posture to function as the lid for the basket 8 and the lock device 32 is turned to a lock position, the plunger 321 of the lock device 32 is engaged with a hole of the vertical member 73 of the basket 8, resulting in locking.

On the other hand, when the panel 8 is lifted up as indicated by a chain line in Fig. 8 and the panel 8 is further put into a roughly vertical posture, the panel 8 can be stored by moving it downwards, in the same manner as described referring to Fig. 3 or the like (posture 8c in Fig. 9). In this modified example, as shown in Figs. 9 and 10, a partition wall 33 disposed in parallel to the rear wall of the basket 7 is provided. The partition wall 33 may be provided with an engaging and stopping block 34 at an upper portion thereof. The engaging and stopping block 34 has a portion having the same function as the vertical member 73 of Fig. 11 which is engaged with the plunger 321 of the lock device 32 at a position where the panel 8 is stored in the basket 8. Therefore, also in the condition where the panel 8 is stored in the basket 7, the panel 8 is fixed to the basket 7 by the lock device 32.

By thus locking with the lock device 32, an antitheft effect is obtained, and, at the same time, it is possible to restrain the panel 8 from chattering and from being scratched easily. The partition wall 33 provides means for indicating the engaging and stopping block 34, and functions to partition the inside of the basket 7 into a luggage-storing space and a space for storing the panel 8, thereby enhancing a protective effect for the panel 8.

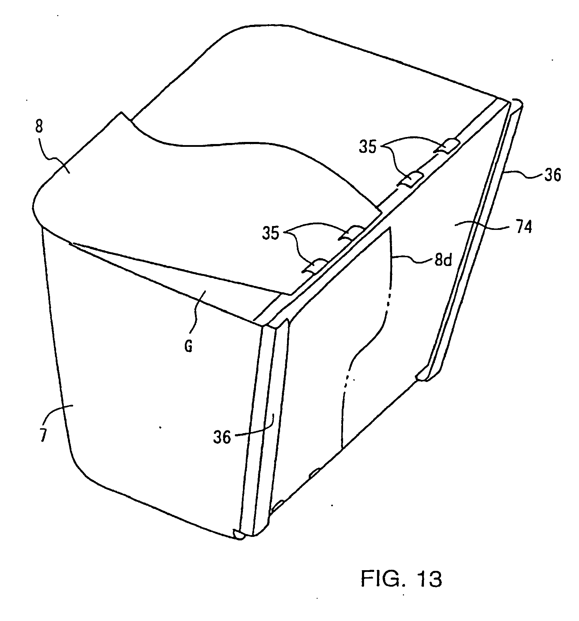

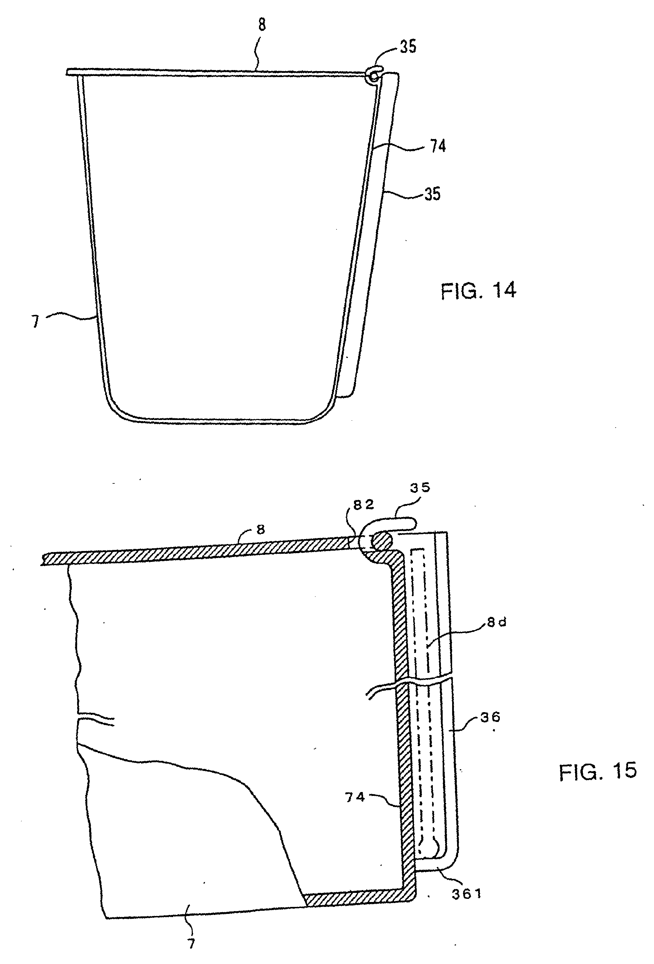

Next, a second modified example will be described. While a structure capable of storing the panel 8 in the basket 7 is adopted in the above example, the panel 8 is stored in a holding portion provided on the rear outside of the basket 7 in this second modified example. Fig. 13 is a perspective view of the basket, Fig. 14 is a side sectional view, and Fig. 15 is an enlarged sectional view. In these figures, the panel 8 is hooked on hooks 35 provided at a rear upper portion of the basket, in the posture of being mounted roughly horizontally on the basket 7. The hooks 35 each have such a shape as to project upwards from the upper edge of the rear wall 74 of the basket 7 and be bent toward the rear portion of the vehicle body. The hooks 35 are provided at a plurality of positions (in this example, four positions) in the width direction of the basket 7, and the panel 8 is provided with engaging holes 82 engageable with the hooks 35, at the same intervals as the hooks 35.

With this constitution, the hooks 35 are engaged with the engaging holes 82, with the panel 8 in a vertically erected posture. When the hooks 35 are fitted into the engaging holes 82, the panel 8 is tilted down to a horizontal posture to cover an upper portion of the basket 7. On the other hand, when the panel 8 is moved to the rear side of the vehicle body in the condition where the panel 8 is erected from the horizontal posture to the vertical posture, the engagement between the engaging holes 82 and the hooks 35 is released, and the panel 8 can be separated from the basket 7.

In this second modified example, a holding portion capable of accommodating the panel 8 separated from the basket 7 is provided on the outside of the basket 7. A pair of angle members 36 L-shaped in horizontal sectional shape are fitted in the state of being separated from each other in the width direction of the vehicle body, on the outside of the rear wall 74 of the basket 7, as a holding member for the panel 8. The angle member 36 has a receiving portion 361 at a lower portion thereof. Both left and right ends of the panel 8 separated from the basket 7 are guided by the angle members 36, and an end face of the panel 8 located on the rear side at the time of being fitted, namely, the end face on the side where the engaging holes 82 are provided is received by the receiving portions 361, and the panel 8 is held in the posture indicated by symbol 8d in Fig. 14.

The basket 7 has a shape contracted to be smaller on the lower side. Therefore, when the panel 8 is formed in a storable shape conforming to the shape of the basket 7, the width of the panel 8 must be reduced on the side of the rear portion of the basket 7 as shown in Fig. 13. Therefore, when the panel 8 is set to cover the upper portion of the basket 7, gaps G are generated (See Fig. 13) .

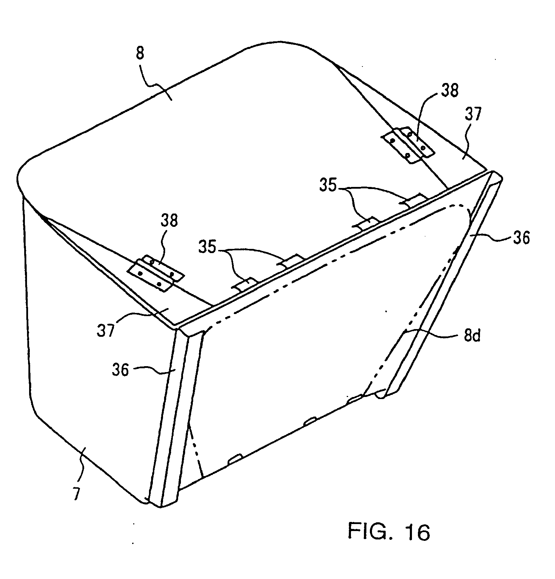

In view of this, in a third modified example described below, a contrivance to cover the gaps G is made. Fig. 16 is a perspective view of the basket 7 according to the third modified example, in which the same symbols as in Fig. 13 denote the same or equivalent portions. In Fig. 16, triangular auxiliary plates 37 capable of covering the gaps G are provided in the width direction of the panel 8. The auxiliary plates 37 are each connected to the panel 8 by a hinge 38. The auxiliary plates 37 can be folded, and laid on the panel 8, by utilizing pivot shafts of the hinges 38. Thus, the panel 8 can be enlarged by developing so as to eliminate the gaps at the time of covering the upper portion of the basket 7; on the other hand, at the time of being stored on the rear side of the basket 7, the panel 8 can be reduced in size by folding the auxiliary plates 3.

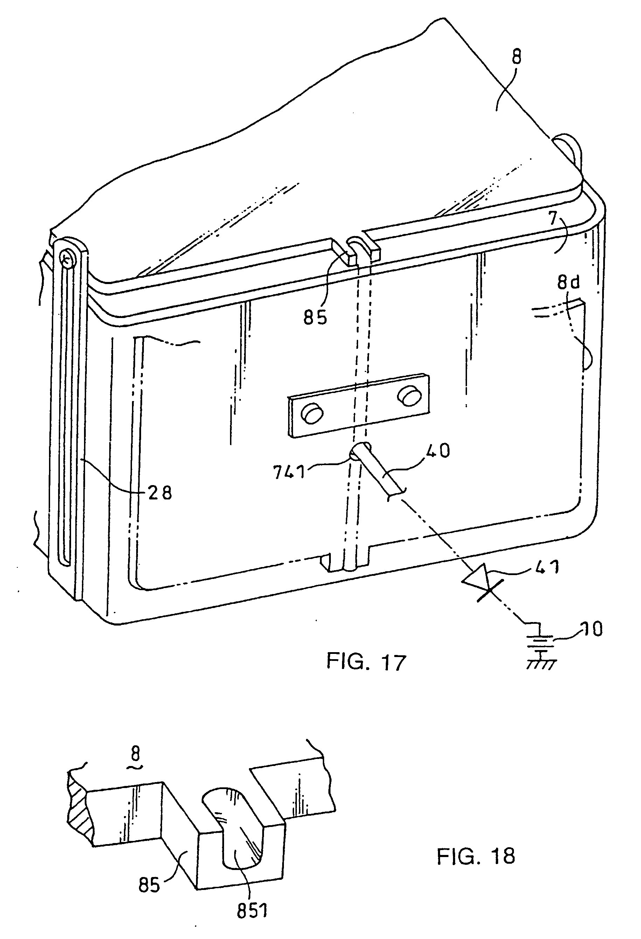

Fig. 17 is a perspective view of a rear portion of the basket 7 according to a fourth modified example, and Fig. 18 is a perspective view of a cable connecting portion of the panel 8. In Fig. 17, a cable connecting portion 85 for connecting a cable 40 for transmitting the electric power generated by the panel 8 to the battery 10 is provided at a rear portion of the panel 8. The cable 40 is connected to an output terminal (not shown) of the panel 8 by the cable connecting portion 85. The cable 40 is led out to the rear side of the vehicle body through a through-hole 741 provided in the rear wall 74 of the basket 7, and is connected to the battery 10 through the above-mentioned harness 18. A diode 41 for inhibiting reverse flow of electric current is provided at an intermediate portion of the cable 40.

The panel 8 is stored near the rear wall 74 of the basket 7, with the cable connecting portion 85 on the lower side (posture 8d in Fig. 17). At this time, the cable 40 is so treated as to extend upwards from the cable connecting portion 85 to reach the through-hole 741. Namely, the leading-out direction of the cable 40 is changed by 180° , between the situation where the panel 8 is mounted on the basket 7 in a roughly horizontal posture and the situation where the panel 8 is stored in a roughly vertical posture. Accordingly, the cable connecting portion 85 is provided with a groove 851 opened in two directions as shown in Fig. 18, so as thereby to cope with treatment of the cable 40.

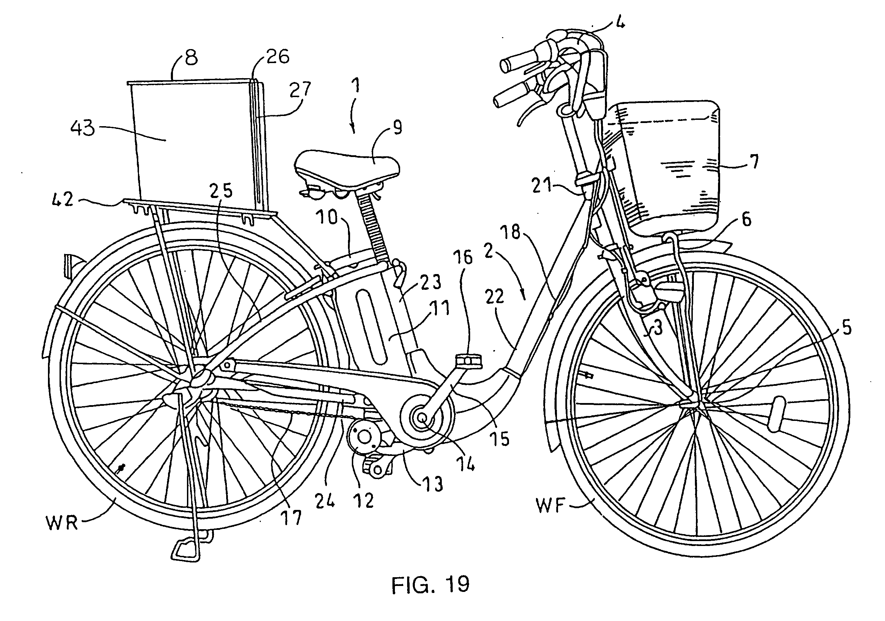

Fig. 19 is a side view of a bicycle comprising a basket (rear basket) mounted on a luggage carrier at a lower portion thereof, in which the same symbols as in Fig. 2 denote the same or equivalent portions. In the bicycle 1 shown in Fig. 19, the rear basket 43 is fixed on the luggage carrier 42 located on the rear side of the seat 9, and the panel 8 is provided on the rear basket 43. The panel 8 is fitted turnably by a pivot shaft 26, in the same manner as in the case of fitting on the basket 7 located at a front portion of the vehicle body. It should be noted here, however, that the pivot shaft 26 is provided near the front wall of the rear basket 43. The pivot shaft 26 is guided vertically in guide holes 27 provided at side surfaces of the rear basket 43, whereby the panel 8 can be stored in the rear basket 43, which is a constitution applicable in common to the one shown in Fig. 1.

The structure shown in Fig. 19 is not limitative; the structures for storing the panel 8 on the inside or outside of the rear basket 43 are the same as the structures for storing the panel 8 on the inside or outside of the front basket 7. Therefore, the constitutions described referring to Figs. 1 to 18 above can be applied to the rear basket 43 and the panel 8 mounted thereon in a roughly horizontal posture. In the application, it is natural that modifications can be appropriately made by known means according to the shape and size of the rear basket 43.

Besides, while examples of mounting the panel on the motor-assisted bicycle have been shown in the above embodiments, the present invention is not limited to the above embodiments; the present invention can be widely applied generally to motor-assisted vehicles in which tread force is assisted by power of an electric motor, and can be applied to motor-driven vehicles such as a motor-driven wheel chair for running by power of an electric motor. Further, the present invention can be used for engine vehicles, for example, those which comprise a solar cell panel for charging a starting battery.

Furthermore, the panel can not only be provided on the basket provided at a front portion or a rear portion of the vehicle body but can also be provided on each of the baskets provided at a front portion and a rear portion of the vehicle body.

The invention can be summarized as follows:

To store a solar cell panel, which is mounted on a motor-assisted vehicle in a roughly horizontal posture, in a luggage basket so that the solar cell panel is not scratched or stained at non-use time.

A solar cell panel 8 is supported on a front basket 7 in a horizontal posture, to receive light. In the cases of night or raining when sunlight is not received, the panel 8 is stored in the basket 7. Particularly, the panel 8 is supported by a pivot shaft 26 near a rear wall of the basket 7 so that it can be swiveled relative to the basket 7. Side surfaces of the basket 7 are provided with guide holes 7 for guiding the panel 8 through the pivot shaft 26 at the time of storing. The pivot shaft 26 is guided by the guide holes 27, and the panel 8 is stored in the basket 7 with the pivot shaft 26 on the lower side.

## Claims

1. A vehicle with solar cell panel (8) mounted thereon, said vehicle comprising a storage box (7) opened on the upper side thereof provided at a vehicle body, the solar cell panel (8) being held on said storage box (7),
**characterized in that** said storage box (7) is provided at a front portion of the vehicle body and adapted to store said solar cell panel (8) along a rear wall (74) of said storage box (7) in a non-use position of the solar cell panel (8).

2. A vehicle with solar cell panel (8) mounted thereon, said vehicle comprising a storage box (43) opened on the upper side thereof provided at a rear portion of a vehicle body, the solar cell panel (8) being held on said storage box (43),
**characterized in that** said storage box (43) is adapted to store said solar cell panel (8) along a front wall of said storage box (43) in a non-use position of the solar cell panel.

3. A vehicle with solar cell as set forth in claim 1 or 2, comprising:
a pivot shaft (26) provided at one end of said solar cell panel (8) so as to pivotally support said solar cell panel (8) swivelably relative to said storage box (7; 43) at a position near a wall (74) on the side where said solar cell panel (8) is stored, and
guide means (27) provided in said storage box (7; 43) in order to guide said pivot shaft (26) in a moving direction of said solar cell panel (8) at the time of storing said solar cell panel (8).

4. A vehicle with solar panel as set force in any of claims 1 to 3, comprising:
a lock device (32) fitted to said solar cell panel, and an engaging member (73) provided at an upper portion of said storage box (8) and engaged with said lock device (32).

5. A vehicle with solar cell as set forth in any of claims 1 to 4, wherein said solar cell panel (8) is stored along an inside wall surface of said storage box (7; 43).

6. A vehicle with solar cell as set forth in claim 3, comprising a connecting portion (85) through with a cable (40) for taking out electric power generated by said solar cell panel (8) is connected to said solar cell panel (8) in the vicinity of said pivot shaft (26).

7. A vehicle with solar cell as set forth in claim 1 or 2, comprising a holding member (36) for accommodating said solar cell panel (8) so that said solar cell panel (8) is stored along the outer wall surface of said storage box (7).

## Patentansprüche

1. Fahrzeug mit daran angebrachter Solarzellentafel (8), umfassend einen an einem Fahrzeugkörper vorgesehenen Aufbewahrungskasten (7), der an seiner Oberseite offen ist, wobei die Solarzellentafel (8) an dem Aufbewahrungskasten (7) gehalten wird,
**dadurch gekennzeichnet, dass** der Aufbewahrungskasten (7) an einem vorderen Abschnitt des Fahrzeugkörpers vorgesehen und dazu ausgelegt ist, in einer Nichtgebrauchsstellung der Solarzellentafel (8) die Solarzellentafel (8) entlang einer Rückwand (74) des Aufbewahrungskastens (7) aufzubewahren.

2. Fahrzeug mit daran angebrachter Solarzellentafel (8), umfassend einen an einem hinteren Abschnitt eines Fahrzeugkörpers vorgesehenen Aufbewahrungskasten (43), der an seiner Oberseite offen ist, wobei die Solarzellentafel (8) an dem Aufbewahrungskasten (43) gehalten wird,
**dadurch gekennzeichnet, dass** der Aufbewahrungskasten (43) dazu ausgelegt ist, in einer Nichtgebrauchsstellung der Solarzellentafel die Solarzellentafel (8) entlang einer Vorderwand des Aufbewahrungskastens (43) aufzubewahren.

3. Fahrzeug mit Solarzelle nach Anspruch 1 oder 2, umfassend:
eine Schwenkwelle (26), die an einem Ende der Solarzellentafel (8) vorgesehen ist, um die Solarzellentafel (8) relativ zu dem Aufbewahrungskasten (7; 43) an einer Position in der Nähe einer Wand (74) an der Seite, wo die Solarzellentafel (8) aufbewahrt wird, schwenkbar zu lagern, und
Führungsmittel (27), die in dem Aufbewahrungskasten (7; 43) vorgesehen sind, um bei der Aufbewahrung der Solarzellentafel (8) die Schwenkwelle (26) in Bewegungsrichtung der Solarzellentafel (8) zu führen.

4. Fahrzeug mit Solartafel nach einem der Ansprüche 1 bis 3, umfassend:
eine Sperrvorrichtung (32), die an der Solarzellentafel angebracht ist, und ein Eingriffselement (73), das an einem oberen Abschnitt des Aufbewahrungskastens (8) vorgesehen ist und mit der Sperrvorrichtung (32) in Eingriff tritt.

5. Fahrzeug mit Solarzelle nach einem der Ansprüche 1 bis 4, worin die Solarzellentafel (8) entlang einer Innenwändoberfläche des Aufbewahrungskastens (7; 43) aufbewahrt wird.

6. Fahrzeug mit Solarzelle nach Anspruch 3, das einen Verbindungsabschnitt (85) umfasst, durch den ein Kabel (40) zum Abnehmen von durch die Solarzellentafel (8) erzeugter elektrischer Energie mit der Solarzellentafel (8) in der Nähe der Schwenkwelle (26) verbunden ist.

7. Fahrzeug mit Solarzelle nach Anspruch 1 oder 2, das ein Halteelement (36) umfasst, um die Solarzellentafel (8) derart unterzubringen, dass die Solarzellentafel (8) entlang der Außenwandoberfläche des Aufbewahrungskastens (7) aufbewahrt wird.

## Revendications

1. Véhicule avec panneau solaire (8) monté sur ce dernier ; ledit véhicule comprenant une boîte de stockage (7) ouverte sur son côté supérieur, prévue au niveau d'un corps de véhicule, le panneau solaire (8) étant maintenu sur ladite boîte de stockage (7),
**caractérisé en ce que** ladite boîte de stockage (7) est prévue au niveau d'une partie avant du corps de véhicule et adaptée pour stocker ledit panneau solaire (8) le long d'une paroi arrière (74) de ladite boîte de stockage (7) dans une position de non utilisation du panneau solaire (8).

2. Véhicule avec panneau solaire (8) monté sur ce dernier, ledit véhicule comprenant une boîte de stockage (43) ouverte sur son côté supérieur, prévue au niveau d'une partie arrière d'un corps de véhicule, le panneau solaire (8) étant maintenu sur ladite boîte de stockage (43),
**caractérisé en ce que** ladite boîte de stockage (43) est adaptée pour stocker ledit panneau solaire (8) le long d'une paroi avant de ladite boîte de stockage (43) dans une position de non utilisation du panneau solaire.

3. Véhicule avec panneau solaire selon la revendication 1 ou 2, comprenant :
un arbre de pivot (26) prévu au niveau d'une extrémité dudit panneau solaire (8) afin de supporter de manière pivotante ledit panneau solaire (8) de manière oscillante par rapport à ladite boîte de stockage (7 ; 43) dans une position à proximité d'une paroi (74) sur le côté où ledit panneau solaire (8) est stocké, et
des moyens de guidage (27) prévus dans ladite boîte de stockage (7 ; 43) afin de guider ledit arbre de pivot (26) dans une direction de déplacement dudit panneau solaire (8) au moment du stockage dudit panneau solaire (8).

4. Véhicule avec panneau solaire selon l'une quelconque des revendications 1 à 3, comprenant :
un dispositif de blocage (32) monté sur ledit panneau solaire, et un élément de mise en prise (73) prévu au niveau d'une partie supérieure de ladite boîte de stockage (8) et mis en prise avec ledit dispositif de blocage (32).

5. Véhicule avec panneau solaire selon l'une quelconque des revendications 1 à 4, dans lequel ledit panneau solaire (8) est stocké le long d'une surface de paroi interne de ladite boîte de stockage (7 ; 43).

6. Véhicule avec panneau solaire selon la revendication 3, comprenant une partie de raccordement (85) à travers laquelle un câble (40) pour prendre le courant électrique généré par ledit panneau solaire (8) est raccordé audit panneau solaire (8) à proximité dudit arbre de pivot (26).

7. Véhicule avec panneau solaire selon la revendication 1 ou 2, comprenant un élément de support (36) pour loger ledit panneau solaire (8) de sorte que ledit panneau solaire (8) est stocké le long de la surface de paroi externe de ladite boîte de stockage (7).
